# EUROPEAN PATENT APPLICATION

(11) **EP 4 664 444 A1**
(43) Date of publication of application: **17.12.2025**
(21) Application number: 24214221.4
(22) Date of filing: 20.11.2024
(51) Int. Cl.: G09G 5/14, G06V 40/16

(54) **INFORMATION PROCESSING SYSTEM, PROGRAM, AND INFORMATION PROCESSING METHOD**

(30) Priority: 12.06.2024 JP 2024095312
(71) Applicant: FUJIFILM Business Innovation Corp., Minato-ku Tokyo (JP)
(72) Inventor: SASAKI, Hirotake, Ebina-shi, Kanagawa (JP); IKEDA, Nanaka, Ebina-shi, Kanagawa (JP); MAEKAWA, Shinichi, Yokohama-shi, Kanagawa (JP); TAKEUCHI, Ko, Yokohama-shi, Kanagawa (JP); SUDO, Masami, Yokohama-shi, Kanagawa (JP); NIMIYA, Hiroshi, Yokohama-shi, Kanagawa (JP); YOSHIDA, Arisa, Yokohama-shi, Kanagawa (JP); EGAWA, Satoshi, Yokohama-shi, Kanagawa (JP); USAMI, Yukiko, Yokohama-shi, Kanagawa (JP)
(74) Representative: Kurig, Thomas

(57) **Abstract**

An information processing system includes one or plural processors configured to acquire a speech image including a speaking person, acquire display information for displaying spoken content of the speaking person, and perform a control of displaying the display information in a specific region not overlapping with a face of the speaking person in the speech image.

## Description

### BACKGROUND OF THE INVENTION

### (i) Field of the Invention

The present invention relates to an information processing system, a program, and an information processing method.

### (ii) Description of Related Art

WO2023/074126A discloses an information processing apparatus including an environment information processing portion that predicts a trend in a vehicle outside environment during viewing of content, and an optimization processing portion that determines a drawing method of the content based on the predicted trend in the vehicle outside environment, in which the optimization processing portion detects a landscape outside a vehicle seen through a non-transparent screen on which the content is to be drawn or through a transparent screen on which the content is to be drawn, as a background of the content, and determines a drawing color based on a color of the background.

JP2020-17252A discloses a color compensation method of setting a preset object position of a virtual object with respect to an actual scene, capturing an image of the actual scene using an image sensor, generating a background image for a field of view (FOV) of a display by mapping the image of the actual scene to the FOV of the display, generating an adjusted virtual object by executing color compensation for the virtual object in accordance with a background overlap region corresponding to the preset object position in the background image, and displaying the adjusted virtual object on the display in accordance with the preset object position.

JP2022-89884A discloses an electronic apparatus in which a display portion displays a first virtual image together with a background seen on a sight line of a user, the display portion displays a second virtual image for increasing visibility of the first virtual image together with the background seen on the sight line of the user earlier than a timing at which the first virtual image is displayed, and the second virtual image includes the first virtual image displayed in a color complementary to a color of the background.

### SUMMARY OF THE INVENTION

Spoken content of a speaking person may be displayed in a region within a speech image including the speaking person. In this case, a configuration of displaying the spoken content in a region overlapping with a face of the speaking person within the speech image may have to be adopted. However, adopting such a configuration results in inability to understand the spoken content of the speaking person while seeing a facial expression of the speaking person.

An object of the present invention is to provide ability to understand spoken content of a speaking person while seeing a facial expression of the speaking person.

According to a first aspect of the present disclosure, there is provided an information processing system including one or a plurality of processors configured to acquire a speech image including a speaking person, acquire display information for displaying spoken content of the speaking person, and perform a control of displaying the display information in a specific region not overlapping with a face of the speaking person in the speech image.

According to a second aspect of the present disclosure, in the information processing system according to the first aspect, the one or the plurality of processors may be configured to determine, as the specific region, a region having a size determined based on the display information.

According to a third aspect of the present disclosure, in the information processing system according to the second aspect, the size determined based on the display information may be a size in which the display information is disposable.

According to a fourth aspect of the present disclosure, in the information processing system according to the second aspect, the size determined based on the display information may be a size in which the display information is disposable by reducing a size of the display information within a visible range.

According to a fifth aspect of the present disclosure, in the information processing system according to any one of the first to fourth aspects, the one or the plurality of processors may be configured to determine, as the specific region, a region having a feature determined based on the display information.

According to a sixth aspect of the present disclosure, in the information processing system according to the fifth aspect, the region having the feature determined based on the display information may be a region in which visibility of the display information in a case where the display information is disposed is higher than a predetermined visibility reference.

According to a seventh aspect of the present disclosure, in the information processing system according to the fifth aspect, the region having the feature determined based on the display information may be a region in which an amount of change in the display information for increasing visibility of the display information above a predetermined visibility reference is smaller than a predetermined reference amount.

According to an eighth aspect of the present disclosure, in the information processing system according to any one of the first to seventh aspects, the one or the plurality of processors may be configured to acquire the speech image further including another speaking person, further acquire another display information for displaying spoken content of the other speaking person, and perform a control of displaying the display information and the other display information in a plurality of regions not overlapping with any of the face of the speaking person and a face of the other speaking person in the speech image.

According to a ninth aspect of the present disclosure, in the information processing system according to the eighth aspect, the plurality of regions may include a first region that is within a predetermined reference distance from the speaking person and the other speaking person, and a second region that is within the reference distance from the speaking person and that is not within the reference distance from the other speaking person, and the one or the plurality of processors may be configured to determine the first region as the specific region on a condition that visibility of the display information in a case where the display information is disposed in the first region is higher than a predetermined visibility reference and that visibility of the display information in a case where the display information is disposed in the second region is lower than the visibility reference.

According to a tenth aspect of the present disclosure, in the information processing system according to the ninth aspect, the plurality of regions may further include a third region that is not within the reference distance from the speaking person and that is within the reference distance from the other speaking person, and the one or the plurality of processors may be configured to determine the first region as the specific region on a further condition that visibility of the other display information in a case where the other display information is disposed in the first region and visibility of the other display information in a case where the other display information is disposed in the third region are higher than the visibility reference.

According to an eleventh aspect of the present disclosure, in the information processing system according to any one of the first to tenth aspects, the one or the plurality of processors may be configured to change the display information to improve visibility of the display information in a case where the display information is disposed in the specific region, before displaying the display information in the specific region in the speech image.

According to a twelfth aspect of the present disclosure, there is provided a program causing a computer to implement a function of acquiring a speech image including a speaking person, a function of acquiring display information for displaying spoken content of the speaking person, and a function of performing a control of displaying the display information in a specific region not overlapping with a face of the speaking person in the speech image.

According to a thirteenth aspect of the present disclosure, there is provided an information processing method including acquiring a speech image including a speaking person, acquiring display information for displaying spoken content of the speaking person, and performing a control of displaying the display information in a specific region not overlapping with a face of the speaking person in the speech image.

According to the first aspect of the present disclosure, the spoken content of the speaking person can be understood while seeing a facial expression of the speaking person.

According to the second aspect of the present disclosure, the display information for displaying the spoken content of the speaking person can be displayed in the display region by taking a size of the display region into consideration.

According to the third aspect of the present disclosure, the display information can be understood in one display region without reducing the display information.

According to the fourth aspect of the present disclosure, the display information can be understood in one display region even in a case where there is no region having the size in which the display information is disposable.

According to the fifth aspect of the present disclosure, the display information for displaying the spoken content of the speaking person can be displayed in the display region by taking the feature of the display region into consideration.

According to the sixth aspect of the present disclosure, the visibility of the display information can be improved without changing the display information.

According to the seventh aspect of the present disclosure, the visibility of the display information can be improved even in a case where there is no region in which the visibility of the display information can be improved.

According to the eighth aspect of the present disclosure, spoken content of a plurality of speaking persons can be understood while seeing facial expressions of the plurality of speaking persons.

According to the ninth aspect of the present disclosure, a determination to display the display information for displaying spoken content of one speaking person in which of the region that is within the reference distance from the one speaking person and the other speaking person or the region that is within the reference distance from the one speaking person and that is not within the reference distance from the other speaking person can be made.

According to the tenth aspect of the present disclosure, a determination to display the display information for displaying the spoken content of the other speaking person in the region that is not within the reference distance from the one speaking person and that is within the reference distance from the other speaking person can be made.

According to the eleventh aspect of the present disclosure, the visibility of the display information for displaying the spoken content of the speaking person can be increased.

According to the twelfth aspect of the present disclosure, the spoken content of the speaking person can be understood while seeing the facial expression of the speaking person.

According to the thirteenth aspect of the present disclosure, the spoken content of the speaking person can be understood while seeing the facial expression of the speaking person.

### BRIEF DESCRIPTION OF THE DRAWINGS

Exemplary embodiment(s) of the present invention will be described in detail based on the following figures, wherein:
Fig. 1 is a diagram illustrating an overall configuration example of an AR system in the present exemplary embodiment;
Fig. 2 is a diagram illustrating a hardware configuration example of AR glasses in the present exemplary embodiment;
Fig. 3 is a diagram illustrating a conceptual configuration example of an AR module in the present exemplary embodiment;
Fig. 4 is a diagram illustrating a hardware configuration example of an AR server in the present exemplary embodiment;
Fig. 5 is a diagram illustrating a schematic operation of the AR system of a first aspect;
Fig. 6 is a diagram illustrating a schematic operation of the AR system of a second aspect;
Figs. 7A and 7B are diagrams illustrating a schematic operation of the AR system of a third aspect;
Figs. 8A and 8B are diagrams illustrating a schematic operation of the AR system of a fourth aspect;
Fig. 9 is a diagram illustrating a schematic operation of the AR system of a fifth aspect;
Fig. 10 is a block diagram illustrating a functional configuration example of the AR server in the present exemplary embodiment;
Fig. 11 is a flowchart illustrating an operation example of the AR server in the AR system of the first aspect;
Fig. 12 is a flowchart illustrating an operation example of the AR server in the AR system of the second aspect;
Fig. 13 is a flowchart illustrating an operation example of the AR server in the AR system of the third aspect;
Fig. 14 is a flowchart illustrating an operation example of the AR server in the AR system of the fourth aspect; and
Fig. 15 is a flowchart illustrating an operation example of the AR server in the AR system of the fifth aspect.

### DETAILED DESCRIPTION OF THE INVENTION

Hereinafter, the present exemplary embodiment will be described in detail with reference to the accompanying drawings.

### (Summary of Present Exemplary Embodiment)

The present exemplary embodiment provides an information processing system that acquires a speech image including a speaking person, acquires display information for displaying spoken content of the speaking person, and performs a control of displaying the display information in a specific region not overlapping with a face of the speaking person in the speech image.

The "system" may be configured with a single apparatus or may be configured with a plurality of apparatuses. Hereinafter, an information processing system configured with a single apparatus will be illustrated. An augmented reality (AR) server in an AR system will be illustratively described as the single apparatus.

### (Overall Configuration of AR System)

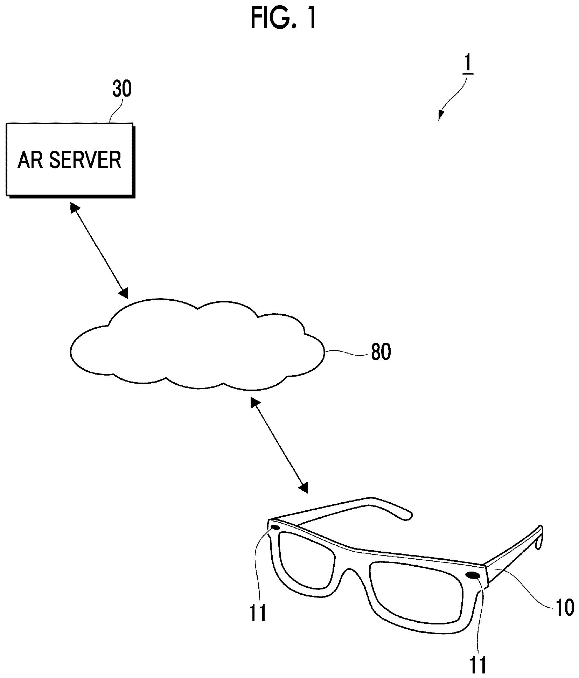

Fig. 1 is a diagram illustrating an overall configuration example of an AR system 1 in the present exemplary embodiment. As illustrated, the AR system 1 includes AR glasses 10, an AR server 30, and a communication line 80. While only one pair of AR glasses 10 are illustrated, there may be a plurality of pairs of AR glasses 10.

The AR glasses 10 are an eyewear-type wearable terminal apparatus. The term "wearable" means being wearable by a user. Thus, the eyewear-type wearable terminal apparatus is a computer apparatus actually wearable by the user on a head portion in the form of eyewear.

The AR glasses 10 are an apparatus that implements AR display to the user. The term "AR" is "Augmented Reality" and refers to display of a virtual screen to the user in a superimposed manner on a real space. That is, the user can view the virtual screen via the AR glasses 10 and can also view the real space through the AR glasses 10. In this case, the "virtual screen" is an image that is created by a computer and that is visible using the AR glasses 10. The "real space" is an actual existing space.

Two cameras 11 are attached to both ends of a front part of a frame of the AR glasses 10. While an image of the augmented reality (hereinafter, referred to as an "AR image") is assumed to be a two-dimensional image in the present exemplary embodiment, the AR image may be a three-dimensional image. The three-dimensional image refers to an image in which information about a distance is recorded for each pixel, and is referred to as a "distance image". For example, a stereo camera may be used as the cameras 11 in acquiring the three-dimensional image. Alternatively, light detection and ranging (LiDAR) may be used for acquiring the three-dimensional image.

While the AR glasses 10 are illustrated as the eyewear-type apparatus, the present invention is not limited to this. Apparatuses of any shapes or types may be used as long as the apparatuses display AR. Specifically, an optical transmissive display may be used in a broader sense. For example, mixed reality (MR) glasses may be used instead of the AR glasses.

The AR server 30 is a server computer that performs processing for displaying information on the AR glasses 10. Specifically, information to be displayed on the AR glasses 10 is generated, and the information is output to a microdisplay 122 (described later) of the AR glasses 10.

The communication line 80 is a line used for information communication between the AR glasses 10 and the AR server 30. For example, a wireless local area network (LAN) or the internet may be used as the communication line 80. Alternatively, for example, a mobile communication system such as 4G or 5G or Bluetooth (registered trademark) may be used as the communication line 80.

### (Hardware Configuration of AR Glasses)

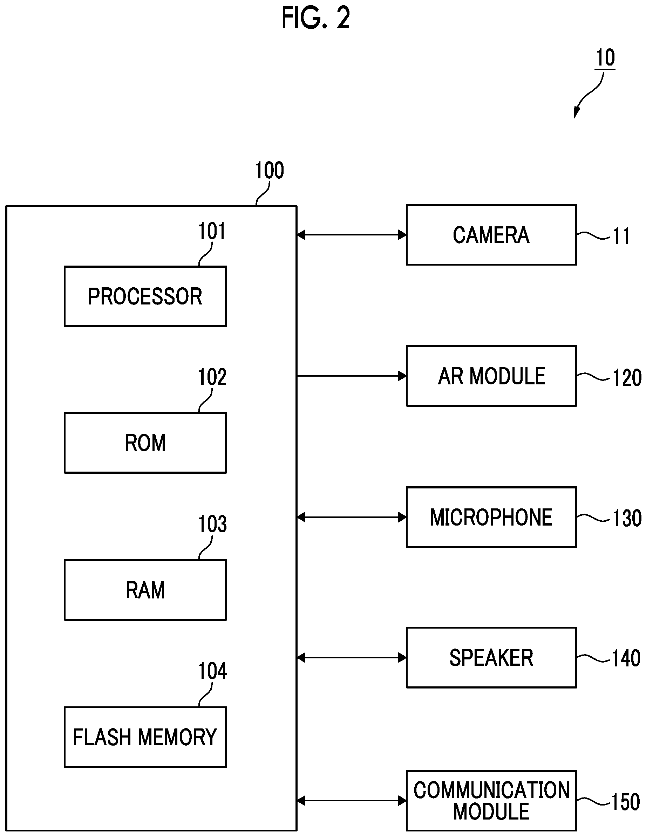

Fig. 2 is a diagram illustrating a hardware configuration example of the AR glasses 10 in the present exemplary embodiment. As illustrated, the AR glasses 10 include a data processing portion 100. The AR glasses 10 further include the camera 11, an AR module 120, a microphone 130, and a speaker 140. The AR glasses 10 further include a communication module 150.

The data processing portion 100 includes a processor 101. The data processing portion 100 further includes a read only memory (ROM) 102 and a random access memory (RAM) 103. The data processing portion 100 further includes a flash memory 104.

For example, the processor 101 is configured with a central processing unit (CPU). The processor 101 implements various functions through execution of a program.

All of the ROM 102, the RAM 103, and the flash memory 104 are semiconductor memories. The ROM 102 stores a basic input output system (BIOS) and the like. The RAM 103 is a main storage device used for executing the program. For example, a dynamic RAM (DRAM) is used as the RAM 103.

The flash memory 104 is used for recording firmware, the program, a data file, and the like. The flash memory 104 is used as an auxiliary storage device.

The camera 11 images a space ahead of a field of view of the user. An angle of view of the camera 11 may be substantially the same as an angle of view of a person or greater than or equal to the angle of view of a person. For example, a CMOS image sensor or a CCD image sensor is used as the camera 11. There may be a single camera 11 or a plurality of cameras 11. In the example in Fig. 1, there are two cameras 11. In this case, for example, the two cameras 11 may be disposed at both ends of the front part of the frame. Stereo imaging can be performed using the two cameras 11. A distance to a subject can be measured, or a foreground-background relationship between subjects can be estimated.

The AR module 120 is a module that implements visual recognition of the augmented reality in which real scenery is combined with the AR image. The AR module 120 is configured with an optical component and an electronic component.

Representative methods of the AR module 120 include the following methods. A first method is disposing a half mirror ahead of an eye of the user. A second method is disposing a volume hologram ahead of the eye of the user. A third method is disposing a blazed diffraction grating ahead of the eye of the user.

The microphone 130 is a device that converts voice of the user or ambient sound into an electrical signal.

The speaker 140 is a device that converts an electrical signal into sound and outputs the sound. The speaker 140 may be a bone conduction speaker or a cartilage conduction speaker.

The speaker 140 may be a device independent of the AR glasses 10, such as a wireless earphone. In this case, the speaker 140 is connected to the AR glasses 10 using Bluetooth (registered trademark) or the like.

The communication module 150 is a device complying with a protocol used for communication through the communication line 80. The communication module 150 may also be a device complying with a protocol used for communication with other external apparatuses. Examples of the protocol used for communication with the external apparatuses include Wi-Fi (registered trademark) and Bluetooth (registered trademark).

While illustration is not provided, the AR glasses 10 may be additionally provided with an inertial sensor, a positioning sensor, an oscillator, and the like.

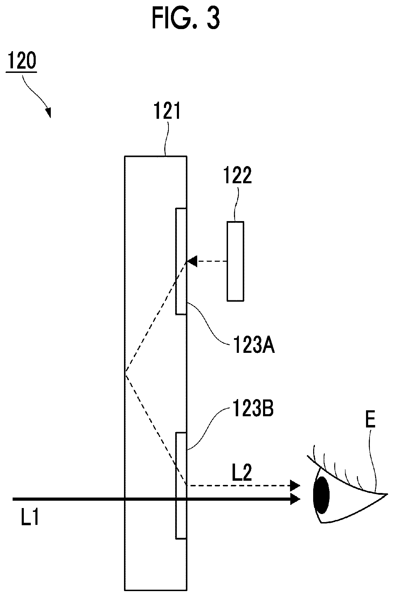

Fig. 3 is a diagram illustrating a conceptual configuration example of the AR module 120 in the present exemplary embodiment. The AR module 120 illustrated in Fig. 3 corresponds to the method of disposing the blazed diffraction grating ahead of the eye of the user.

The AR module 120 illustrated in Fig. 3 includes a light guide plate 121 and the microdisplay 122. The AR module 120 illustrated in Fig. 3 also includes a diffraction grating 123A into which video light L2 is input. The AR module 120 illustrated in Fig. 3 further includes a diffraction grating 123B from which the video light L2 is output.

The light guide plate 121 corresponds to lenses of eyewear. For example, the light guide plate 121 has transmittance of 85% or more. Thus, the user can directly view the scenery ahead through the light guide plate 121. Extraneous light L1 travels straight through the light guide plate 121 and the diffraction grating 123B to be incident on an eye E of the user.

The microdisplay 122 is a display device on which the AR image visible to the user is displayed. Light of the AR image displayed on the microdisplay 122 is projected to the light guide plate 121 as the video light L2. The video light L2 is refracted by the diffraction grating 123A and reaches the diffraction grating 123B while being reflected in the light guide plate 121. The diffraction grating 123B refracts the video light L2 in a direction of the eye E of the user.

Accordingly, the extraneous light L1 and the video light L2 are incident on the eye E of the user at the same time. Consequently, the user recognizes the presence of the AR image ahead in a line of sight of the user.

### (Hardware Configuration of AR Server)

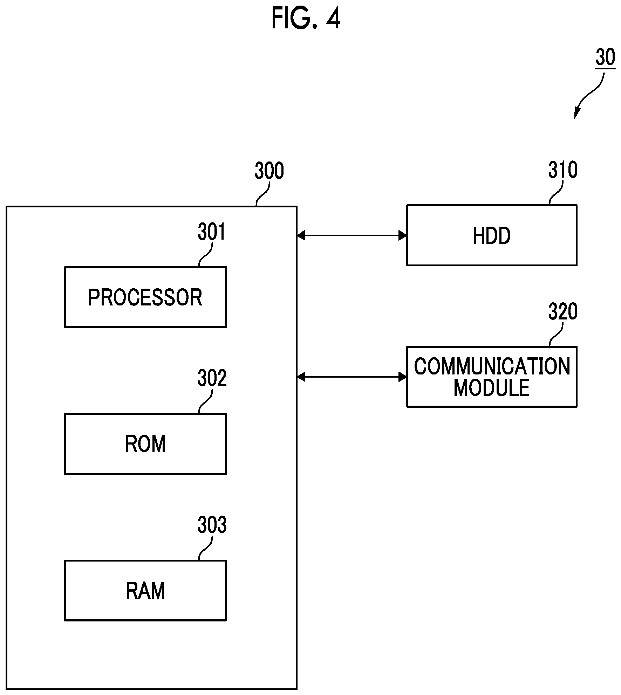

Fig. 4 is a diagram illustrating a hardware configuration example of the AR server 30 in the present exemplary embodiment. As illustrated, the AR server 30 includes a data processing portion 300. The AR server 30 further includes a hard disk drive (HDD) 310 and a communication module 320.

The data processing portion 300 includes a processor 301. The data processing portion 300 further includes a ROM 302 and a RAM 303.

For example, the processor 301 is configured with a CPU. The processor 301 implements various functions through execution of a program.

Both of the ROM 302 and the RAM 303 are semiconductor memories. The ROM 302 stores a BIOS and the like. The RAM 303 is used as a main storage device used for executing the program. For example, a DRAM is used as the RAM 303.

The HDD 310 is an auxiliary storage device using a magnetic disk as a recording medium. In the present exemplary embodiment, the HDD 310 is used as the auxiliary storage device. Alternatively, a non-volatile rewritable semiconductor memory may be used as the auxiliary storage device. An operating system or an application program is installed in the HDD 310.

The communication module 320 is a device complying with a protocol used for communication through the communication line 80.

While illustration is not provided, the AR server 30 may be additionally provided with a display, a keyboard, a mouse, and the like.

### (Schematic Operation of AR System)

### ((First Aspect))

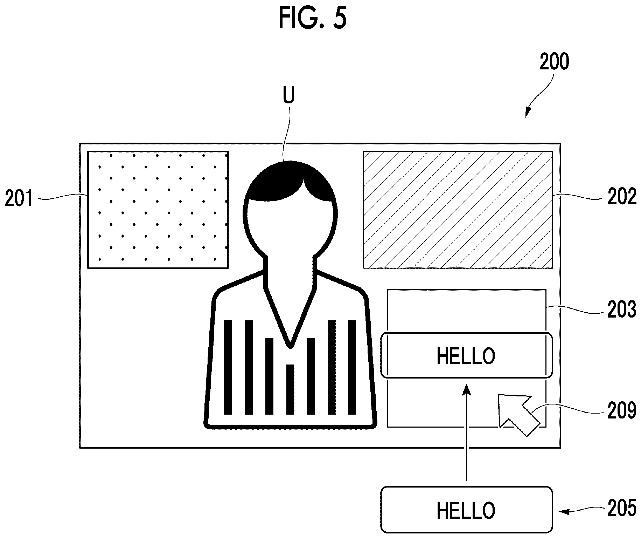

Fig. 5 is a diagram illustrating a schematic operation of the AR system 1 of a first aspect.

In Fig. 5, a background image 200 including a speaking person U is seen from the AR glasses 10. The background image 200 includes regions 201 to 203 as a region of a uniform color not overlapping with a face of the speaking person U. The AR server 30 acquires display information 205 representing speaking of the speaking person U. All of the regions 201 to 203 may be regions in which visibility of the display information 205 is not reduced in a case where the display information 205 is displayed. Particularly, the region 203 may be a region in which the visibility of the display information 205 is increased in a case where the display information 205 is displayed. Therefore, the user selects the region 203, as indicated by a mouse cursor 209. Accordingly, the AR server 30 displays the display information 205 in the region 203 of the background image 200.

### ((Second Aspect))

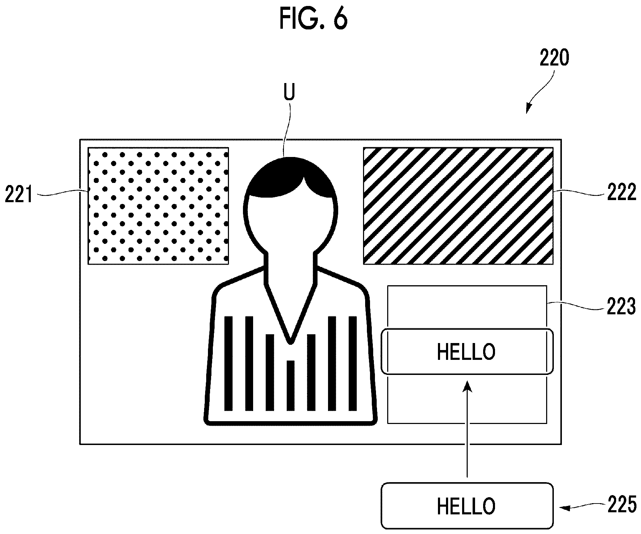

Fig. 6 is a diagram illustrating a schematic operation of the AR system 1 of a second aspect.

In Fig. 6, a background image 220 including the speaking person U is seen from the AR glasses 10. The background image 220 includes regions 221 to 223 as the region of the uniform color not overlapping with the face of the speaking person U. The AR server 30 acquires display information 225 representing the speaking of the speaking person U. The regions 221 and 222 may be regions in which visibility of the display information 225 is reduced in a case where the display information 225 is displayed. That is, the regions 221 and 222 may be regions in which visual recognition of the display information 225 is difficult unless a color of the display information 225 is changed. Meanwhile, the region 223 may be a region in which the visibility of the display information 225 is increased in a case where the display information 225 is displayed. That is, the region 223 may be a region in which the color of the display information 225 does not have to be changed in a case where the display information 225 is displayed. Therefore, the AR server 30 displays the display information 225 in the region 223 of the background image 220.

### ((Third Aspect))

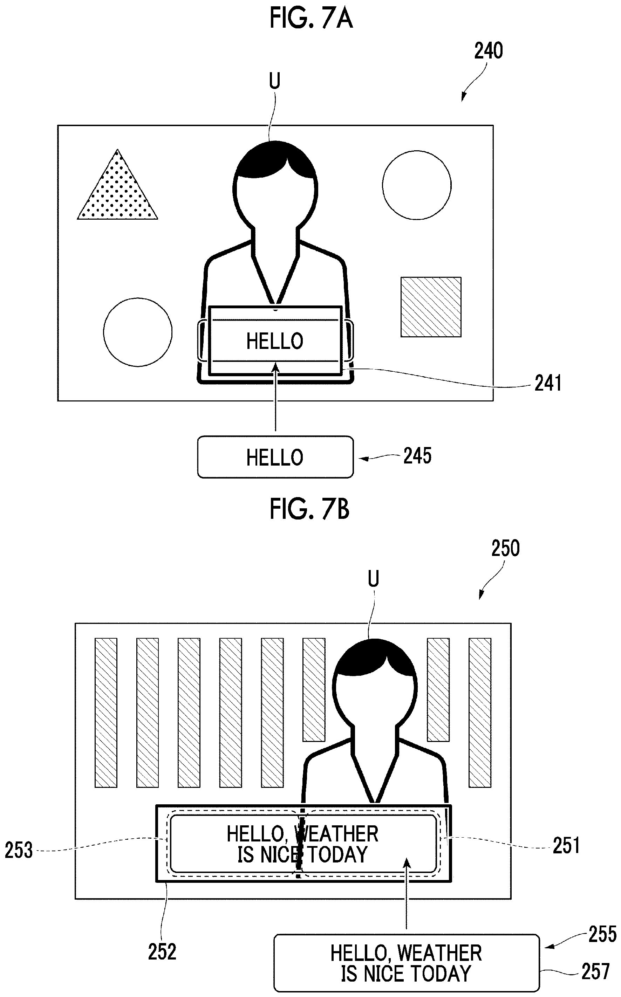

Figs. 7A and 7B are diagrams illustrating a schematic operation of the AR system 1 of a third aspect.

In Fig. 7A, a background image 240 including the speaking person U is seen from the AR glasses 10. The background image 240 includes a region 241 as the region of the uniform color not overlapping with the face of the speaking person U. The AR server 30 acquires display information 245 representing the speaking of the speaking person U. The region 241 may be a region having a size sufficient for displaying the display information 245. Therefore, the AR server 30 displays the display information 245 in the region 241 of the background image 240.

In Fig. 7B, a background image 250 including the speaking person U is seen from the AR glasses 10. The background image 250 includes a region 251 as the region of the uniform color not overlapping with the face of the speaking person U. The AR server 30 acquires display information 255 representing the speaking of the speaking person U. The region 251 may be a region not having a size sufficient for displaying the display information 255. In this case, the AR server 30 extracts a region 252 having a size sufficient for displaying the display information 255 and having a small amount of change in color. The region 252 is a region in which two colors change only once, as an example of the small amount of change in color. Therefore, the AR server 30 displays the display information 255 in the region 252 of the background image 250. In this case, the region 252 may include a region 253 in which visibility of the display information 255 is reduced in a case where the display information 255 is displayed. Therefore, the AR server 30 changes a color of a part of the display information 255 overlapping with the region 253. For example, the AR server 30 may change a color of a part of a dialogue region 257 of the display information 255 overlapping with the region 253. Change of the color is not illustrated in the drawing.

### ((Fourth Aspect))

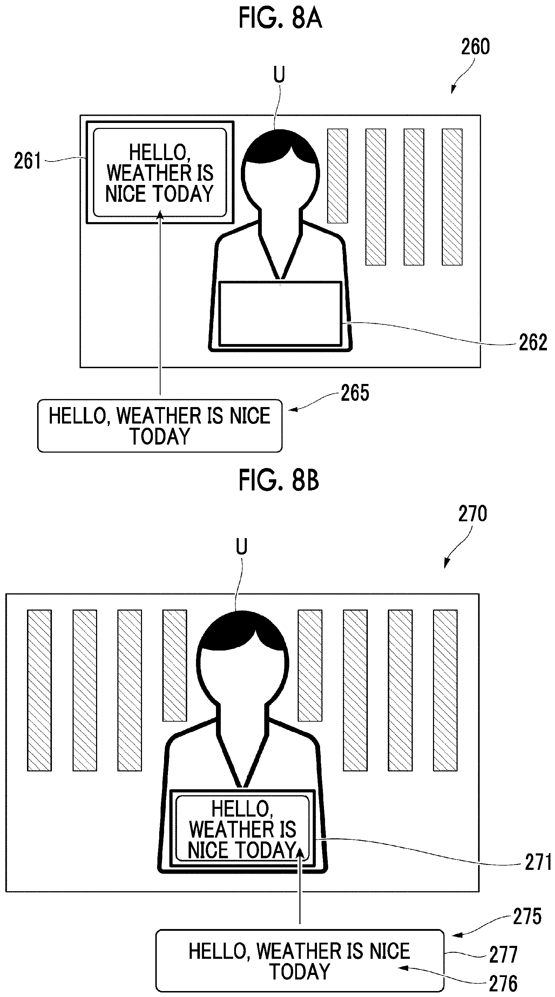

Figs. 8A and 8B are diagrams illustrating a schematic operation of the AR system 1 of a fourth aspect.

In Fig. 8A, a background image 260 including the speaking person U is seen from the AR glasses 10. The background image 260 includes regions 261 and 262 as the region of the uniform color not overlapping with the face of the speaking person U. The AR server 30 acquires display information 265 representing the speaking of the speaking person U. The region 261 may be a region having a size sufficient for displaying the display information 265. Meanwhile, the region 262 may be a region not having a size sufficient for displaying the display information 265. That is, the region 262 may be a region in which the display information 265 cannot be displayed even by deforming the display information 265. Therefore, the AR server 30 displays the display information 265 in the region 261 of the background image 260.

In Fig. 8B, a background image 270 including the speaking person U is seen from the AR glasses 10. The background image 270 includes a region 271 as the region of the uniform color not overlapping with the face of the speaking person U. The AR server 30 acquires display information 275 representing the speaking of the speaking person U. The region 271 may be a region not having a size sufficient for displaying the display information 275. That is, the region 271 may be a region in which the display information 275 cannot be displayed even by deforming the display information 275. Therefore, the AR server 30 displays the display information 275 in the region 271 of the background image 270 by changing a size of the display information 275. For example, the AR server 30 may change sizes of a text 276 and a dialogue region 277 of the display information 275.

### ((Fifth Aspect))

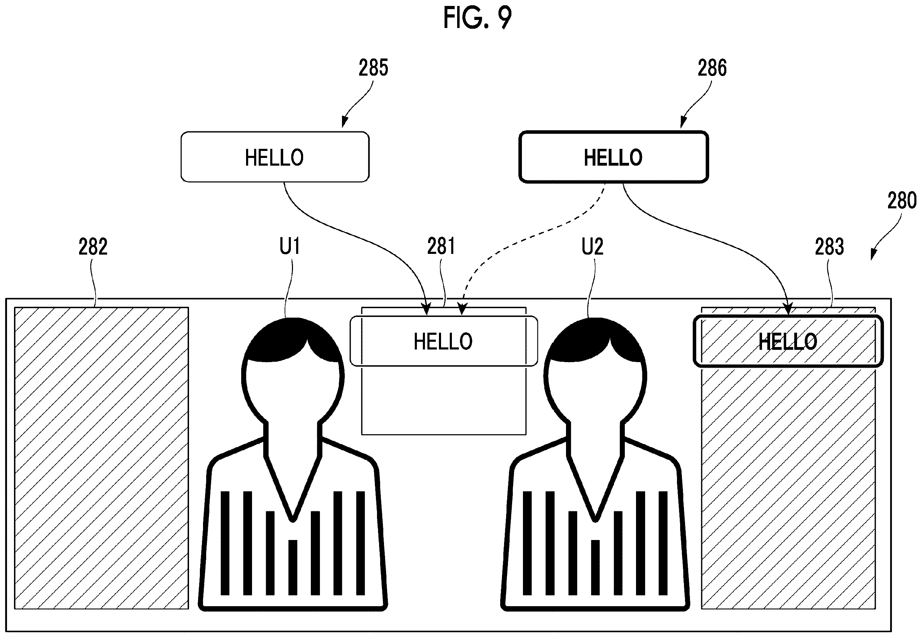

Fig. 9 is a diagram illustrating a schematic operation of the AR system 1 of a fifth aspect.

In Fig. 9, a background image 280 including speaking persons U1 and U2 is seen from the AR glasses 10. The background image 280 includes regions 281 to 283 as a region of a uniform color not overlapping with faces of the speaking persons U1 and U2. The AR server 30 acquires display information 285 representing speaking of the speaking person U1 and display information 286 representing speaking of the speaking person U2. For example, colors of the display information 285 and 286 may be used to indicate which of the display information 285 and 286 represents the speaking of which of the speaking persons U1 and U2. In the drawing, the colors are represented by a line thickness.

The regions 281 and 282 are present near the speaking person U1 and thus, are candidates of a region for displaying the display information 285. The region 281 may be a region in which visibility of the display information 285 is increased in a case where the display information 285 is displayed. Meanwhile, the region 282 may be a region in which the visibility of the display information 285 is reduced in a case where the display information 285 is displayed. Accordingly, only the region 281 is the candidate of the region for displaying the display information 285.

Meanwhile, the regions 281 and 283 are present near the speaking person U2 and thus, are candidates of a region for displaying the display information 286. Both of the regions 281 and 283 may be regions in which visibility of the display information 286 is increased in a case where the display information 286 is displayed. Accordingly, the regions 281 and 283 are the candidates of the region for displaying the display information 286.

In this case, the AR server 30 determines regions for displaying the display information in order from the display information for which the number of candidates of the region for displaying the display information is small.

First, the number of candidates of the region for displaying the display information 285 is one. Therefore, the AR server 30 displays the display information 285 in the region 281 of the background image 280.

Next, the number of candidates of the region for displaying the display information 286 is two. Therefore, the AR server 30 displays the display information 286 in the region 283 of the background image 280. That is, the region 281 in which the display information 285 has already been displayed is excluded from the region for displaying the display information 286. In Fig. 9, this exclusion is indicated by a broken line from the display information 286 to the region 281.

### (Functional Configuration of AR Server)

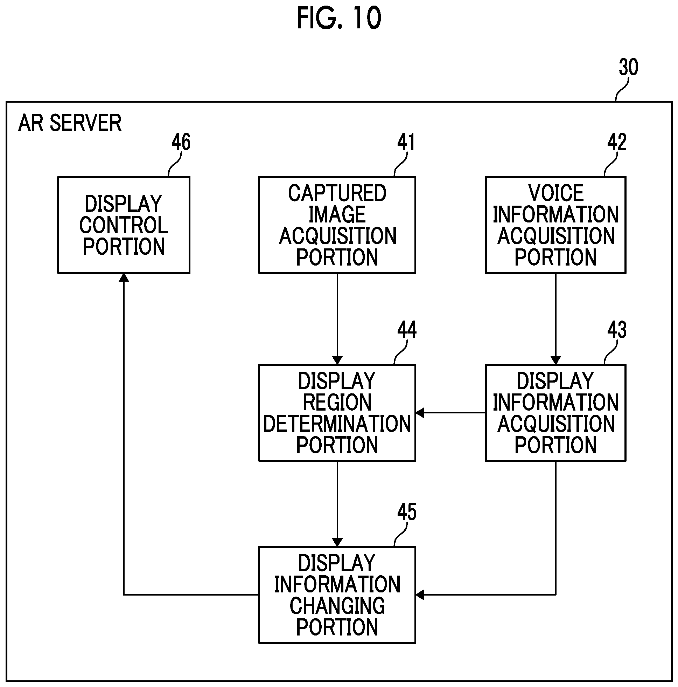

Fig. 10 is a block diagram illustrating a functional configuration example of the AR server 30 in the present exemplary embodiment. As illustrated, the AR server 30 includes a captured image acquisition portion 41, a voice information acquisition portion 42, and a display information acquisition portion 43. The AR server 30 further includes a display region determination portion 44, a display information changing portion 45, and a display control portion 46.

The captured image acquisition portion 41 acquires a captured image including the speaking person captured by the camera 11 of the AR glasses 10.

In the first to fourth aspects, the captured image acquisition portion 41 acquires the captured image including the speaking person U. In this case, the captured image including the speaking person U is an example of the speech image including the speaking person. The processing of the captured image acquisition portion 41 is an example of acquiring the speech image.

In the first to fifth aspects, the captured image acquisition portion 41 acquires the captured image including the speaking persons U1 and U2. In this case, the speaking person U1 is an example of the speaking person, and the speaking person U2 is an example of another speaking person. The captured image including the speaking persons U1 and U2 is an example of a speech image including the speaking person and further including the other speaking person. The processing of the captured image acquisition portion 41 is also an example of acquiring the speech image.

The voice information acquisition portion 42 acquires voice information including voice of the speaking person collected by the microphone 130 of the AR glasses 10. The voice information acquisition portion 42 may acquire the voice information including identification information of the speaking person in a state of being associated with the voice of the speaking person.

In the first to fourth aspects, the voice information acquisition portion 42 acquires the voice information including voice of the speaking person U. The captured image includes only the speaking person U. Thus, the voice information acquisition portion 42 does not have to acquire identification information of the speaking person U.

In the fifth aspect, the voice information acquisition portion 42 acquires the voice information including voice of the speaking person U1 and voice of the speaking person U2. The voice information acquisition portion 42 may acquire the voice information including identification information of the speaking person U1 in a state of being associated with the voice of the speaking person U1. The voice information acquisition portion 42 may acquire the voice information including identification information of the speaking person U2 in a state of being associated with the voice of the speaking person U2.

The display information acquisition portion 43 acquires display information for displaying the spoken content of the speaking person based on the voice information acquired by the voice information acquisition portion 42. For example, the display information acquisition portion 43 may acquire, as the display information, text information obtained by voice recognition of the voice of the speaking person included in the voice information. The display information acquisition portion 43 may acquire, as the display information, an illustration image drawn based on the text information. The display information acquisition portion 43 may acquire, as the display information, a video of sign language interpretation based on the voice of the speaking person included in the voice information.

In the first to fourth aspects, the display information acquisition portion 43 acquires the display information for displaying spoken content of the speaking person U. In this case, the processing of the display information acquisition portion 43 is an example of acquiring the display information for displaying the spoken content of the speaking person.

In the fifth aspect, the display information acquisition portion 43 acquires the display information for displaying spoken content of the speaking persons U1 and U2. The display information acquisition portion 43 separately acquires the display information for displaying the spoken content of the speaking persons U1 and U2. In this case, for example, the display information acquisition portion 43 may perform such separation based on the identification information of the speaking persons U1 and U2 included in the voice information. For example, the display information acquisition portion 43 may represent a result of such separation with colors in the display information. In this case, the processing of the display information acquisition portion 43 is an example of acquiring the display information for displaying the spoken content of the speaking person and further acquiring another display information for displaying spoken content of the other speaking person.

The display region determination portion 44 extracts a region not overlapping with the face of the speaking person from the captured image acquired by the captured image acquisition portion 41. For example, the display region determination portion 44 may detect a face region using an existing technology and extract a region other than the face region as the region not overlapping with the face.

The display region determination portion 44 also extracts the region of the uniform color from the extracted region not overlapping with the face of the speaking person. For example, in a case where a distance between colors in a region is less than or equal to a threshold value, the display region determination portion 44 may extract the region as the region of the uniform color.

The display region determination portion 44 also determines a display region for displaying the display information from the extracted region of the uniform color. The display region determination portion 44 may determine the display region based on the display information acquired by the display information acquisition portion 43. In this case, the display region is an example of the specific region not overlapping with the face of the speaking person in the speech image.

Specifically, the display region determination portion 44 may determine, as the display region, a region having a size determined based on the display information. In this case, the processing of the display region determination portion 44 is an example of determining, as the specific region, a region having a size determined based on the display information.

For example, the size determined based on the display information may be a size of a predetermined ratio of the display information.

For example, the size determined based on the display information may be a size sufficient for displaying the display information. In this case, the processing of the display region determination portion 44 is an example of determining, as the specific region, a region having a size in which the display information can be disposed.

For example, the size determined based on the display information may be a size in which the display information can be displayed by reducing the display information. Reducing the display information may mean reducing the display information within a visible range. In this case, the processing of the display region determination portion 44 is an example of determining, as the specific region, the region having the size in which the display information can be disposed by reducing the size of the display information within the visible range.

The display region determination portion 44 may determine, as the display region, a region having a feature determined based on the display information. In this case, the processing of the display region determination portion 44 is an example of determining, as the specific region, a region having a feature determined based on the display information.

For example, the feature determined based on the display information may be a feature related to visibility of the display information in a case where the display information is displayed.

For example, the feature related to the visibility of the display information may be a feature of an increase in the visibility of the display information. High visibility may mean visibility that is higher than a predetermined reference related to visibility. In this case, the processing of the display region determination portion 44 is an example of determining, as the specific region, a region in which the visibility of the display information in a case where the display information is disposed is higher than a predetermined visibility reference.

For example, the feature related to the visibility of the display information may be a feature of a small amount of change for increasing the visibility of the display information. High visibility may mean visibility that is higher than a predetermined reference related to visibility. A small amount of change may mean an amount of change that is smaller than a predetermined reference amount. In this case, the processing of the display region determination portion 44 is an example of determining, as the specific region, a region in which an amount of change in the display information for increasing the visibility of the display information above the predetermined visibility reference is smaller than a predetermined reference amount.

In a case where the captured image includes a plurality of speaking persons, the display region determination portion 44 may determine the display region as follows. That is, first, the display region determination portion 44 specifies a region near each speaking person. Next, the display region determination portion 44 obtains the number of regions in which the visibility of the display information is increased in a case where the display information representing the spoken content of each speaking person is displayed. Next, the display region determination portion 44 determines the display region from the display information for which the number of regions is small, among pieces of the display information representing the spoken content of each speaking person.

In the first aspect, the display region determination portion 44 extracts the region not overlapping with the face of the speaking person U from the captured image. The display region determination portion 44 also extracts the region of the uniform color from the region not overlapping with the face of the speaking person U. The display region determination portion 44 also extracts, as candidates, regions having a small change in displaying the display information from the region of the uniform color. Accordingly, the user selects a region to be used as the display region from the candidates. Then, the display region determination portion 44 determines the region selected by the user as the display region.

In the second aspect, the display region determination portion 44 extracts the region not overlapping with the face of the speaking person U from the captured image. The display region determination portion 44 also extracts the region of the uniform color from the region not overlapping with the face of the speaking person U. The display region determination portion 44 determines, as the display region, a region having a small change in displaying the display information in the region of the uniform color.

In the third aspect, the display region determination portion 44 extracts the region not overlapping with the face of the speaking person U from the captured image. The display region determination portion 44 also extracts the region of the uniform color from the region not overlapping with the face of the speaking person U.

The display region determination portion 44 determines whether or not there is a region having the size sufficient for displaying the display information in the region of the uniform color. In a case where there is such a region, the display region determination portion 44 determines the region as the display region. In a case where there are a plurality of such regions, the display region determination portion 44 determines, as the display region, a region in which the highest visibility of the display information is achieved in a case where the display information is displayed.

In a case where there is no such region, the display region determination portion 44 determines a region having a small amount of change in color as the display region.

In the fourth aspect, the display region determination portion 44 extracts the region not overlapping with the face of the speaking person U from the captured image. The display region determination portion 44 also extracts the region of the uniform color from the region not overlapping with the face of the speaking person U.

The display region determination portion 44 determines whether or not there is a region having the size sufficient for displaying the display information in the region of the uniform color. In a case where there is such a region, the display region determination portion 44 determines the region as the display region. In a case where there are a plurality of such regions, the display region determination portion 44 determines, as the display region, a region in which the highest visibility of the display information is achieved in a case where the display information is displayed.

In a case where there is no such region, the display region determination portion 44 determines whether or not there is a region in which the display information can be displayed by reducing the display information. In a case where there is such a region, the display region determination portion 44 determines the region as the display region. In a case where there are a plurality of such regions, the display region determination portion 44 determines, as the display region, a region in which the highest visibility of the display information is achieved in a case where the display information is displayed. In a case where there is no such region, the display region determination portion 44 determines a region having a small amount of change in color as the display region.

In the fifth aspect, the display region determination portion 44 extracts a region not overlapping with the faces of the speaking persons U1 and U2 from the captured image. The display region determination portion 44 also extracts the region of the uniform color from the region not overlapping with the faces of the speaking persons U1 and U2.

The display region determination portion 44 also extracts a region near the speaking person U1 and a region near the speaking person U2 from the region of the uniform color. In the example in Fig. 9, the regions 281 and 282 are regions near the speaking person U1, and the regions 281 and 283 are regions near the speaking person U2.

Next, the display region determination portion 44 counts the number of candidates of a region for displaying the display information representing the spoken content of the speaking person U1, among the regions near the speaking person U1. The display region determination portion 44 counts the number of candidates of a region for displaying the display information representing the spoken content of the speaking person U2, among the regions near the speaking person U2. The candidates of the region for displaying the display information may be the regions in which the visibility of the display information is increased in a case where the display information is displayed. In the example in Fig. 9, the number of candidates of the region for displaying the display information representing the spoken content of the speaking person U1 is one, and only the region 281 is the candidate. The number of candidates of the region for displaying the display information representing the spoken content of the speaking person U2 are two, and the regions 281 and 283 are the candidates.

Next, the display region determination portion 44 determines the display region for displaying the display information representing the spoken content of the speaking persons U1 and U2 based on the number of candidates of the region. Specifically, the display region is determined from the display information for which the number of candidates of the region is small. In the example in Fig. 9, the numbers of candidates of the regions for displaying the display information 285 and 286 representing the spoken content of the speaking persons U1 and U2 are one and two, respectively. Accordingly, first, the display region for displaying the display information 285 representing the spoken content of the speaking person U1 is determined as the region 281. Next, the display region for displaying the display information 286 representing the spoken content of the speaking person U2 is determined as the region 283.

In this case, the region 281 is an example of a first region that is within a predetermined reference distance from the speaking person and the other speaking person. The region 282 is an example of a second region that is within the reference distance from the speaking person and that is not within the reference distance from the other speaking person. The region 283 is an example of a third region that is not within the reference distance from the speaking person and that is within the reference distance from the other speaking person.

The processing of the display region determination portion 44 is an example of determining the first region as the specific region on a condition that the visibility of the display information in a case where the display information is disposed in the first region is higher than the predetermined visibility reference and that the visibility of the display information in a case where the display information is disposed in the second region is lower than the visibility reference.

The processing of the display region determination portion 44 is also an example of determining the first region as the specific region on a condition that visibility of the other display information in a case where the other display information is disposed in the first region and visibility of the other display information in a case where the other display information is disposed in the third region are higher than the visibility reference.

The display information changing portion 45 changes the display information acquired by the display information acquisition portion 43 in accordance with the display region determined by the display region determination portion 44. The display information changing portion 45 changes the display information such that the visibility of the display information is increased in a case where the display information is displayed in the display region. Changing the display information may mean changing an inside color, a border color, a size, or the like of a text included in the display information. Alternatively, changing the display information may mean changing an inside color, a border color, a size, or the like of a dialogue region included in the display information. In this case, the processing of the display information changing portion 45 is an example of changing the display information to improve the visibility of the display information in a case where the display information is disposed in the specific region, before displaying the display information in the specific region in the speech image.

The display control portion 46 performs a control of displaying the display information acquired by the display information acquisition portion 43 on the AR glasses 10. The display information acquired by the display information acquisition portion 43 may be changed by the display information changing portion 45. For example, the display control portion 46 transmits the display information and a position for displaying the display information to the AR glasses 10. Accordingly, the display information in a state of having high visibility is displayed in the display region not overlapping with the face of the speaking person on the AR glasses 10.

In the first to fourth aspects, the display control portion 46 performs a control of displaying the display information for displaying the spoken content of the speaking person U. The display control portion 46 performs a control of displaying the display information in the display region not overlapping with the face of the speaking person U, in which the visibility of the display information is increased. In this case, the processing of the display control portion 46 is an example of performing a control of displaying the display information in the specific region not overlapping with the face of the speaking person in the speech image.

In the fifth aspect, the display control portion 46 performs a control of displaying the display information for displaying the spoken content of the speaking persons U1 and U2. The display control portion 46 performs a control of displaying the display information in the display region not overlapping with the faces of the speaking persons U1 and U2, in which the visibility of the display information is increased. In this case, the processing of the display control portion 46 is an example of performing a control of displaying the display information and the other display information in a plurality of regions not overlapping with any of the face of the speaking person and a face of the other speaking person in the speech image.

### (Operation of AR Server)

### ((First Aspect))

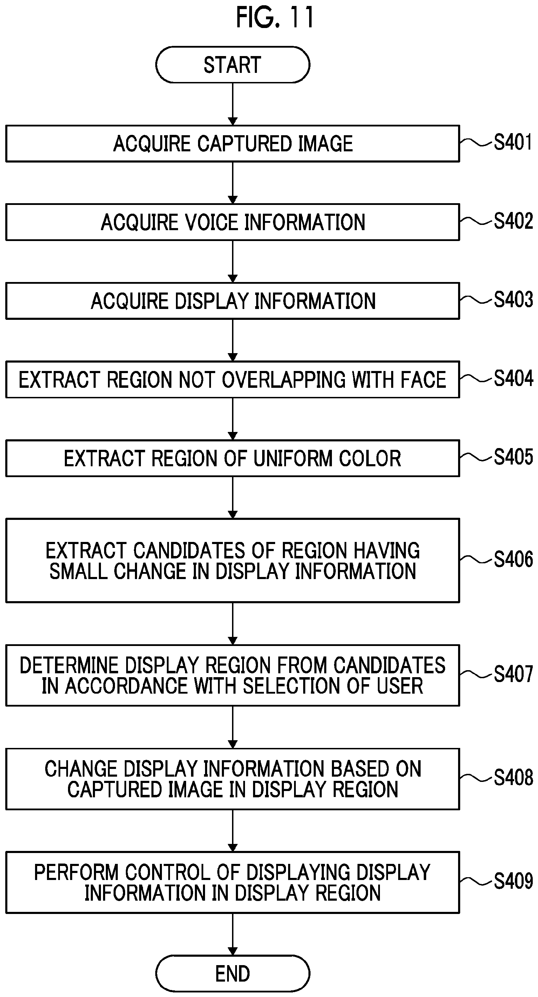

Fig. 11 is a flowchart illustrating an operation example of the AR server 30 in the AR system 1 of the first aspect.

As illustrated, first, the captured image acquisition portion 41 acquires the captured image including the speaking person from the AR glasses 10 (step S401).

Next, the voice information acquisition portion 42 acquires the voice information including the voice of the speaking person from the AR glasses 10 (step S402).

Next, the display information acquisition portion 43 acquires the display information representing the spoken content of the speaking person based on the voice information (step S403).

Next, the display region determination portion 44 extracts the region not overlapping with the face of the speaking person from the captured image (step S404). The display region determination portion 44 also extracts the region of the uniform color from the region not overlapping with the face of the speaking person (step S405). Displaying the display information in the region of the uniform color is also considered. In this case, the display region determination portion 44 extracts a candidates of a region having a small change for increasing the visibility of the display information (step S406). Accordingly, the user may select the region for displaying the display information from the candidates. Then, the display region determination portion 44 determines the selected region as the display region (step S407).

Next, the display information changing portion 45 changes the display information based on the captured image in the determined display region (step S408). Specifically, the display information changing portion 45 changes the display information such that the visibility of the display information with respect to the captured image in the display region is increased. This step may not be executed in a case where the visibility of the display information with respect to the captured image in the display region is already sufficiently high.

Then, the display control portion 46 controls the AR glasses 10 to display the display information in the determined display region (step S409).

In a case where the AR server 30 has acquired a plurality of pieces of display information, the AR server 30 may execute the processing of steps S404 to S409 the number of times corresponding to the number of pieces of display information.

### ((Second Aspect))

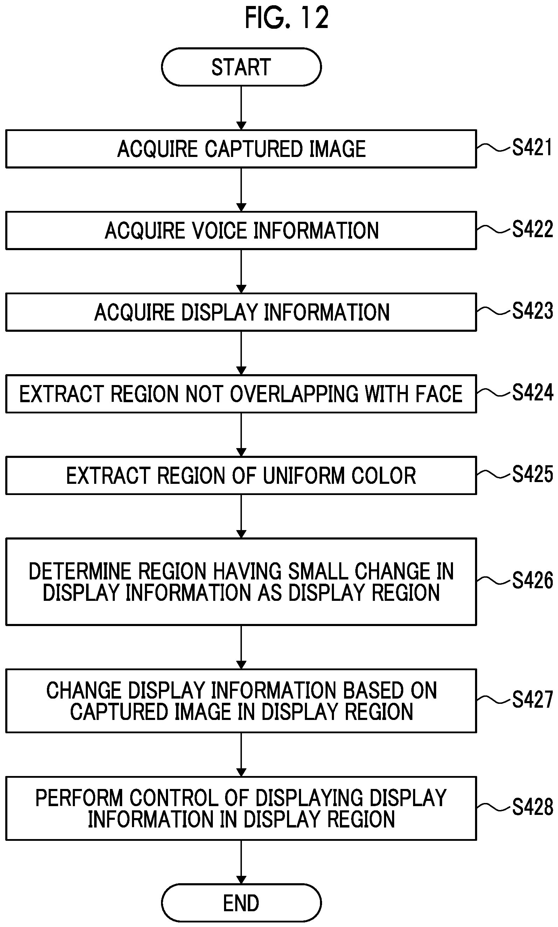

Fig. 12 is a flowchart illustrating an operation example of the AR server 30 in the AR system 1 of the second aspect.

As illustrated, first, the captured image acquisition portion 41 acquires the captured image including the speaking person from the AR glasses 10 (step S421).

Next, the voice information acquisition portion 42 acquires the voice information including the voice of the speaking person from the AR glasses 10 (step S422).

Next, the display information acquisition portion 43 acquires the display information representing the spoken content of the speaking person based on the voice information (step S423).

Next, the display region determination portion 44 extracts the region not overlapping with the face of the speaking person from the captured image (step S424). The display region determination portion 44 also extracts the region of the uniform color from the region not overlapping with the face of the speaking person (step S425). Displaying the display information in the region of the uniform color is also considered. In this case, the display region determination portion 44 determines, as the display region, a region having a small change for improving the visibility of the display information (step S426).

Next, the display information changing portion 45 changes the display information based on the captured image in the determined display region (step S427). Specifically, the display information changing portion 45 changes the display information such that the visibility of the display information with respect to the captured image in the display region is increased. This step may not be executed in a case where the visibility of the display information with respect to the captured image in the display region is already sufficiently high.

Then, the display control portion 46 controls the AR glasses 10 to display the display information in the determined display region (step S428).

In a case where the AR server 30 has acquired a plurality of pieces of display information, the AR server 30 may execute the processing of steps S424 to S428 the number of times corresponding to the number of pieces of display information.

### ((Third Aspect))

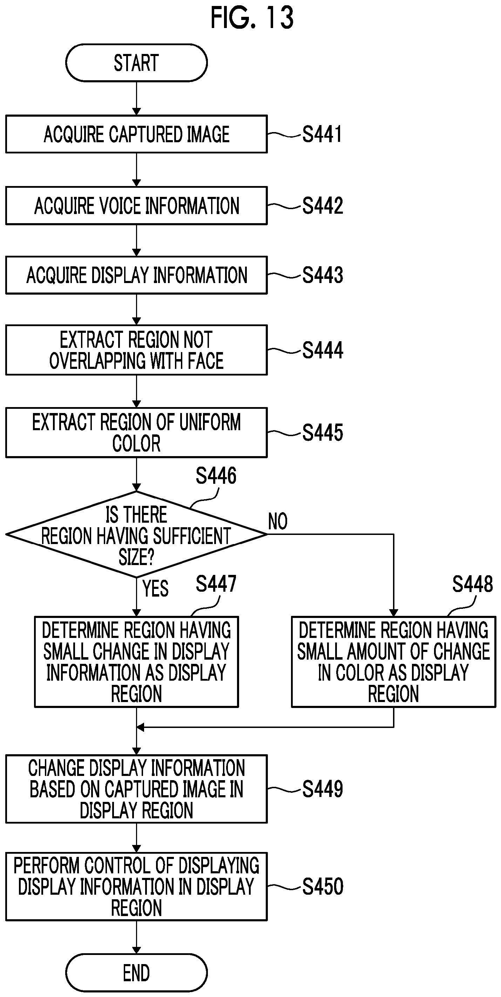

Fig. 13 is a flowchart illustrating an operation example of the AR server 30 in the AR system 1 of the third aspect.

As illustrated, first, the captured image acquisition portion 41 acquires the captured image including the speaking person from the AR glasses 10 (step S441).

Next, the voice information acquisition portion 42 acquires the voice information including the voice of the speaking person from the AR glasses 10 (step S442).

Next, the display information acquisition portion 43 acquires the display information representing the spoken content of the speaking person based on the voice information (step S443).

Next, the display region determination portion 44 extracts the region not overlapping with the face of the speaking person from the captured image (step S444). The display region determination portion 44 also extracts the region of the uniform color from the region not overlapping with the face of the speaking person (step S445). The display region determination portion 44 determines whether or not there is a region having a sufficient size in the region of the uniform color (step S446). The region having a sufficient size means a region having a size sufficient for displaying the display information.

Consequently, a determination that there is a region having a sufficient size in the region of the uniform color may be made. In this case, the display region determination portion 44 determines the display region from the region having a sufficient size. Specifically, the display region determination portion 44 determines, as the display region, a region having a small change for increasing the visibility of the display information (step S447).

Meanwhile, a determination that there is no region having a sufficient size in the region of the uniform color may be made. In this case, the display region determination portion 44 determines, as the display region, a region having a small amount of change in color from the region not overlapping with the face of the speaking person (step S448).

Next, the display information changing portion 45 changes the display information based on the captured image in any determined display region (step S449). Specifically, the display information changing portion 45 changes the display information such that the visibility of the display information with respect to the captured image in the display region is increased. This step may not be executed in a case where the visibility of the display information with respect to the captured image in the display region is already sufficiently high.

Then, the display control portion 46 controls the AR glasses 10 to display the display information in the determined display region (step S450).

In a case where the AR server 30 has acquired a plurality of pieces of display information, the AR server 30 may execute the processing of steps S444 to S450 the number of times corresponding to the number of pieces of display information.

### ((Fourth Aspect))

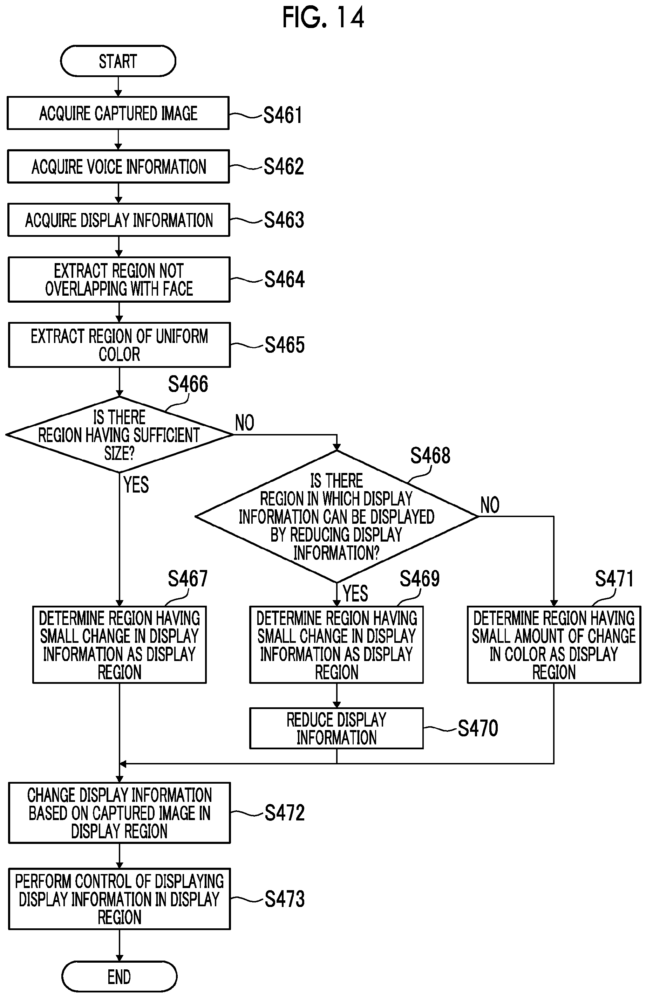

Fig. 14 is a flowchart illustrating an operation example of the AR server 30 in the AR system 1 of the fourth aspect.

As illustrated, first, the captured image acquisition portion 41 acquires the captured image including the speaking person from the AR glasses 10 (step S461).

Next, the voice information acquisition portion 42 acquires the voice information including the voice of the speaking person from the AR glasses 10 (step S462).

Next, the display information acquisition portion 43 acquires the display information representing the spoken content of the speaking person based on the voice information (step S463).

Next, the display region determination portion 44 extracts the region not overlapping with the face of the speaking person from the captured image (step S464). The display region determination portion 44 also extracts the region of the uniform color from the region not overlapping with the face of the speaking person (step S465). The display region determination portion 44 determines whether or not there is a region having a sufficient size in the region of the uniform color (step S466). The region having a sufficient size means a region having a size sufficient for displaying the display information.

Consequently, a determination that there is a region having a sufficient size in the region of the uniform color may be made. In this case, the display region determination portion 44 determines the display region from the region having a sufficient size. Specifically, the display region determination portion 44 determines, as the display region, a region having a small change for increasing the visibility of the display information (step S467).

Meanwhile, a determination that there is no region having a sufficient size in the region of the uniform color may be made. In this case, the display region determination portion 44 determines whether or not there is a region in which the display information can be displayed by reducing the display information (step S468). Specifically, the display region determination portion 44 determines whether or not there is such a region in the region of the uniform color.

Consequently, a determination that there is a region in which the display information can be displayed by reducing the display information may be made. In this case, the display region determination portion 44 determines the display region from the region in which the display information can be displayed by reducing the display information. Specifically, the display region determination portion 44 determines, as the display region, a region having a small change for increasing the visibility of the display information (step S469). The display information changing portion 45 reduces the display information in accordance with the determined display region (step S470).

Meanwhile, a determination that there is no region in which the display information can be displayed by reducing the display information may be made. In this case, the display region determination portion 44 determines, as the display region, a region having a small amount of change in color from the region not overlapping with the face of the speaking person (step S471).

Next, the display information changing portion 45 changes the display information based on the captured image in any determined display region (step S472). Specifically, the display information changing portion 45 changes the display information such that the visibility of the display information with respect to the captured image in the display region is increased. This step may not be executed in a case where the visibility of the display information with respect to the captured image in the display region is already sufficiently high.

Then, the display control portion 46 controls the AR glasses 10 to display the display information in the determined display region (step S473).

In a case where the AR server 30 has acquired a plurality of pieces of display information, the AR server 30 may execute the processing of steps S464 to S473 the number of times corresponding to the number of pieces of display information.

### ((Fifth Aspect))

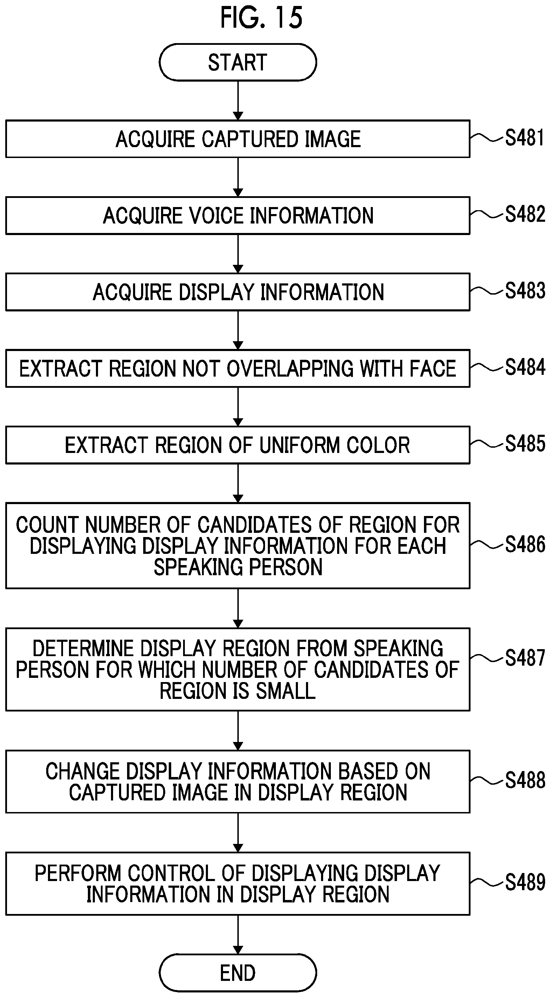

Fig. 15 is a flowchart illustrating an operation example of the AR server 30 in the AR system 1 of the fifth aspect.

As illustrated, first, the captured image acquisition portion 41 acquires the captured image including a plurality of speaking persons from the AR glasses 10 (step S481).

Next, the voice information acquisition portion 42 acquires the voice information including voice of the plurality of speaking persons from the AR glasses 10 (step S482).

Next, the display information acquisition portion 43 acquires a plurality of pieces of display information representing spoken content of the plurality of speaking persons, respectively, based on the voice information (step S483).

Next, the display region determination portion 44 extracts the region not overlapping with the face of the speaking person from the captured image (step S484). The display region determination portion 44 also extracts the region of the uniform color from the region not overlapping with the face of the speaking person (step S485). The display region determination portion 44 counts the number of candidates of the region for displaying the display information representing the spoken content of each speaking person (step S486). Specifically, for each speaking person, the display region determination portion 44 calculates the number of regions in which the visibility of the display information is increased among regions near the speaking person. Accordingly, the display region determination portion 44 determines the display region from the speaking person for which the number of candidates of the region is small (step S487).

Next, the display information changing portion 45 changes the display information based on the captured image in the determined display region (step S488). Specifically, the display information changing portion 45 changes the display information such that the visibility of the display information with respect to the captured image in the display region is increased. This step may not be executed in a case where the visibility of the display information with respect to the captured image in the display region is already sufficiently high.

Then, the display control portion 46 controls the AR glasses 10 to display the display information in the determined display region (step S489).

In a case where the AR server 30 has acquired a plurality of pieces of display information, the AR server 30 may execute the processing of steps S484 to S489 the number of times corresponding to the number of pieces of display information.

### (Processor)

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Program)

The present exemplary embodiment can be applied to a program and a program product. For example, the program to which the present exemplary embodiment is applied is conceived as a program causing a computer to implement a function of acquiring the speech image including the speaking person, a function of acquiring the display information for displaying the spoken content of the speaking person, and a function of performing the control of displaying the display information in the specific region not overlapping with the face of the speaking person in the speech image.

The program to which the present exemplary embodiment is applied can be not only provided by communication means but also provided by storing the program in a recording medium such as a CD-ROM.

### (Supplementary Note)

(((1))) An information processing system comprising:
   one or a plurality of processors configured to:
      acquire a speech image including a speaking person;
      acquire display information for displaying spoken content of the speaking person; and
      perform a control of displaying the display information in a specific region not overlapping with a face of the speaking person in the speech image.
(((2))) The information processing system according to (((1))), wherein the one or the plurality of processors are configured to:
   determine, as the specific region, a region having a size determined based on the display information.
(((3))) The information processing system according to (((2))),
   wherein the size determined based on the display information is a size in which the display information is disposable.
(((4))) The information processing system according to (((2))),
   wherein the size determined based on the display information is a size in which the display information is disposable by reducing a size of the display information within a visible range.
(((5))) The information processing system according to any one of (((1))) to (((4))), wherein the one or the plurality of processors are configured to:
   determine, as the specific region, a region having a feature determined based on the display information.
(((6))) The information processing system according to (((5))),
   wherein the region having the feature determined based on the display information is a region in which visibility of the display information in a case where the display information is disposed is higher than a predetermined visibility reference.
(((7))) The information processing system according to (((5))),
   wherein the region having the feature determined based on the display information is a region in which an amount of change in the display information for increasing visibility of the display information above a predetermined visibility reference is smaller than a predetermined reference amount.
(((8))) The information processing system according to any one of (((1))) to (((7))), wherein the one or the plurality of processors are configured to:
   acquire the speech image further including another speaking person;
   further acquire another display information for displaying spoken content of the other speaking person; and
   perform a control of displaying the display information and the other display information in a plurality of regions not overlapping with any of the face of the speaking person and a face of the other speaking person in the speech image.
(((9))) The information processing system according to (((8))),
   wherein the plurality of regions include a first region that is within a predetermined reference distance from the speaking person and the other speaking person, and a second region that is within the reference distance from the speaking person and that is not within the reference distance from the other speaking person, and
   the one or the plurality of processors are configured to:
      determine the first region as the specific region on a condition that visibility of the display information in a case where the display information is disposed in the first region is higher than a predetermined visibility reference and that visibility of the display information in a case where the display information is disposed in the second region is lower than the visibility reference.
(((10))) The information processing system according to (((9))),
   wherein the plurality of regions further include a third region that is not within the reference distance from the speaking person and that is within the reference distance from the other speaking person, and
   the one or the plurality of processors are configured to:
      determine the first region as the specific region on a further condition that visibility of the other display information in a case where the other display information is disposed in the first region and visibility of the other display information in a case where the other display information is disposed in the third region are higher than the visibility reference.
(((11))) The information processing system according to any one of (((1))) to (((10))), wherein the one or the plurality of processors are configured to:
   change the display information to improve visibility of the display information in a case where the display information is disposed in the specific region, before displaying the display information in the specific region in the speech image.
(((12))) A program causing a computer to implement:
   a function of acquiring a speech image including a speaking person;
   a function of acquiring display information for displaying spoken content of the speaking person; and
   a function of performing a control of displaying the display information in a specific region not overlapping with a face of the speaking person in the speech image.

According to (((1))), the spoken content of the speaking person can be understood while seeing a facial expression of the speaking person.

According to (((2))), the display information for displaying the spoken content of the speaking person can be displayed in the display region by taking a size of the display region into consideration.

According to (((3))), the display information can be understood in one display region without reducing the display information.

According to (((4))), the display information can be understood in one display region even in a case where there is no region having the size in which the display information is disposable.

According to (((5))), the display information for displaying the spoken content of the speaking person can be displayed in the display region by taking the feature of the display region into consideration.

According to (((6))), the visibility of the display information can be improved without changing the display information.

According to (((7))), the visibility of the display information can be improved even in a case where there is no region in which the visibility of the display information can be improved.

According to (((8))), spoken content of a plurality of speaking persons can be understood while seeing facial expressions of the plurality of speaking persons.

According to (((9))), a determination to display the display information for displaying spoken content of one speaking person in which of the region that is within the reference distance from the one speaking person and the other speaking person or the region that is within the reference distance from the one speaking person and that is not within the reference distance from the other speaking person can be made.

According to (((10))), a determination to display the display information for displaying the spoken content of the other speaking person in the region that is not within the reference distance from the one speaking person and that is within the reference distance from the other speaking person can be made.

According to (((11))), the visibility of the display information for displaying the spoken content of the speaking person can be increased.

According to (((12))), the spoken content of the speaking person can be understood while seeing the facial expression of the speaking person.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: AR system
10: AR glasses
30: AR server
41: captured image acquisition portion
42: voice information acquisition portion
43: display information acquisition portion
44: display region determination portion
45: display information changing portion
46: display control portion

## Claims

1. An information processing system comprising:
one or a plurality of processors configured to:
acquire a speech image including a speaking person;
acquire display information for displaying spoken content of the speaking person; and
perform a control of displaying the display information in a specific region not overlapping with a face of the speaking person in the speech image.

2. The information processing system according to claim 1, wherein the one or the plurality of processors are configured to:
determine, as the specific region, a region having a size determined based on the display information.

3. The information processing system according to claim 2,
wherein the size determined based on the display information is a size in which the display information is disposable.

4. The information processing system according to claim 2,
wherein the size determined based on the display information is a size in which the display information is disposable by reducing a size of the display information within a visible range.

5. The information processing system according to any one of claims 1 to 4, wherein the one or the plurality of processors are configured to:
determine, as the specific region, a region having a feature determined based on the display information.

6. The information processing system according to claim 5,
wherein the region having the feature determined based on the display information is a region in which visibility of the display information in a case where the display information is disposed is higher than a predetermined visibility reference.

7. The information processing system according to claim 5,
wherein the region having the feature determined based on the display information is a region in which an amount of change in the display information for increasing visibility of the display information above a predetermined visibility reference is smaller than a predetermined reference amount.

8. The information processing system according to any one of claims 1 to 7, wherein the one or the plurality of processors are configured to:
acquire the speech image further including another speaking person;
further acquire another display information for displaying spoken content of the other speaking person; and
perform a control of displaying the display information and the other display information in a plurality of regions not overlapping with any of the face of the speaking person and a face of the other speaking person in the speech image.

9. The information processing system according to claim 8,
wherein the plurality of regions include a first region that is within a predetermined reference distance from the speaking person and the other speaking person, and a second region that is within the reference distance from the speaking person and that is not within the reference distance from the other speaking person, and
the one or the plurality of processors are configured to:
determine the first region as the specific region on a condition that visibility of the display information in a case where the display information is disposed in the first region is higher than a predetermined visibility reference and that visibility of the display information in a case where the display information is disposed in the second region is lower than the visibility reference.

10. The information processing system according to claim 9,
wherein the plurality of regions further include a third region that is not within the reference distance from the speaking person and that is within the reference distance from the other speaking person, and
the one or the plurality of processors are configured to:
determine the first region as the specific region on a further condition that visibility of the other display information in a case where the other display information is disposed in the first region and visibility of the other display information in a case where the other display information is disposed in the third region are higher than the visibility reference.

11. The information processing system according to any one of claims 1 to 10, wherein the one or the plurality of processors are configured to:
change the display information to improve visibility of the display information in a case where the display information is disposed in the specific region, before displaying the display information in the specific region in the speech image.

12. A program causing a computer to implement:
a function of acquiring a speech image including a speaking person;
a function of acquiring display information for displaying spoken content of the speaking person; and
a function of performing a control of displaying the display information in a specific region not overlapping with a face of the speaking person in the speech image.

13. An information processing method comprising:
acquiring a speech image including a speaking person;
acquiring display information for displaying spoken content of the speaking person; and
performing a control of displaying the display information in a specific region not overlapping with a face of the speaking person in the speech image.
